# EUROPÄISCHE PATENTSCHRIFT

(11) **EP 3 529 129 B1**
(45) Veröffentlichungstag und Bekanntmachung des Hinweises auf die Patenterteilung: **03.03.2021**
(21) Anmeldenummer: 17798105.7
(22) Anmeldetag: 18.10.2017
(51) Int. Cl.: B62D 1/19

(54) **LENKSÄULE MIT ENERGIEABSORPTIONSVORRICHTUNG FÜR EIN KRAFTFAHRZEUG**
STEERING COLUMN COMPRISING AN ENERGY ABSORPTION DEVICE FOR A MOTOR VEHICLE
COLONNE DE DIRECTION À DISPOSITIF D'ABSORPTION D'ÉNERGIE POUR UN VÉHICULE À MOTEUR

(30) Priorität: 19.10.2016 DE 102016220532
(43) Veröffentlichungstag der Anmeldung: 28.08.2019
(73) Patentinhaber: thyssenkrupp Presta AG, 9492 Eschen (LI); thyssenkrupp AG, 45143 Essen (DE)
(72) Erfinder: DOMIG, Markus, 6781 Bartholomäberg (AT); WAIBEL, Gerhard, 6858 Bildstein (AT)
(74) Vertreter: thyssenkrupp Intellectual Property GmbH
(86) Internationale Anmeldenummer: PCT/EP2017/076613
(87) Internationale Veröffentlichungsnummer: WO 2018/073305

(56) Entgegenhaltungen:
- EP-A1- 2 900 540
- DE-A1-102011 015 140

## Beschreibung

Die Erfindung betrifft eine Lenksäule für ein Kraftfahrzeug, mit einem inneren Mantelrohr, das eine Lenkwelle drehbar lagert, und einer äußeren Manteleinheit, die mit dem Fahrzeugchassis verbindbar ist und in der das innere Mantelrohr in Axialrichtung verschiebbar aufgenommen und fixierbar ist, mit einer wirkungsmäßig zwischen dem Mantelrohr und der Manteleinheit angeordneten Energieabsorptionsvorrichtung, in der ein Teil der im Crashfall auftretenden Energie absorbierbar ist, wenn das Mantelrohr gegenüber der Manteleinheit teleskopisch verschoben wird, wobei die Energieabsorptionsvorrichtung mindestens einen auf dem Mantelrohr befestigten Verformungsstreifen aufweist, auf dem mindestens ein mit der Manteleinheit verbundener Deformationsschlitten angeordnet ist, der die äußeren Schmalseiten des mindestens einen Verformungsstreifen umgreift und so eingeklemmt, dass dieser den mindestens einen Verformungsstreifen verformt, wenn im Crashfall der Verformungsstreifen in Axialrichtung gegenüber dem Deformationsschlitten verschoben wird, wobei der Verformungsstreifen durch mindestens einen am Mantelrohr angeordneten Abstandhalter im Abstand zum Mantelrohr gehalten und in radialer Richtung fixiert ist.

Eine derartige Lenksäule für ein Kraftfahrzeug ist aus der DE 10 2011 015 140 A1 bekannt. Ein als Bremse dienender Deformationsschlitten wird im Crashfall über den Verformungsstreifen gezogen, welcher dabei gequetscht und deformiert wird. Der Verformungsstreifen weist einen erhabenen Steg auf, der eine Beabstandung und Abstützung des Verformungsstreifens am Mantelrohr gewährleistet und im Crashfall verhindert, dass sich der Verformungsstreifen durchbiegt und aus dem Deformationsschlitten herausgedrückt wird. Die Ausbildung des Stegs am Verformungsstreifen ist unerwünscht, da dieser Steg die Konstruktionsfreiheit bei der Gestaltung des Verformungsstreifens beeinträchtigt.

Aufgabe der Erfindung ist es, eine Lenksäule für Kraftfahrzeuge mit Energieabsorptionsvorrichtung der eingangs genannten Art anzugeben, die eine alternative Abstützung des Verformungsstreifens bereitstellt.

Die erfindungsgemäße Lösung dieser Aufgabe sieht vor, dass der oder jeder Abstandhalter als eine vom Mantelrohr in Richtung des mindestens einen Verformungsstreifens ragende radiale Ausbuchtung des Mantelrohrs ausgestaltet ist.

Erfindungsgemäß ist der oder jeder Abstandhalter als eine vom Mantelrohr in Richtung des mindestens einen Verformungsstreifens ragende radiale Ausbuchtung des Mantelrohrs ausgestaltet. Diese Ausbuchtung kann auch als Vorsprung bezeichnet werden. Dies erspart die separate Herstellung des Abstandhalters und die Anbringung am Mantelrohr. Ausbuchtung und Mantelrohr sind bevorzugt als einteiliges integrales Bauteil ausgebildet.

Mit Vorteil ist die oder jede Ausbuchtung als eine von der Innenseite des Mantelrohrs eingebrachte Rollierung ausgestaltet. Hierdurch kann die Ausbuchtung auf einfache Weise und kostengünstig in das Mantelrohr eingeformt werden.

In einer ersten vorteilhaften Ausführungsform der Erfindung ist der Abstandhalter als ein in Axialrichtung ausgerichteter Vorsprung ausgestaltet. Bei dieser Ausführungsform ist lediglich ein einziger Abstandhalter erforderlich.

Es ist besonders vorteilhaft, wenn sich der Abstandhalter in Axialrichtung über den verformbaren Bereich des Verformungsstreifens erstreckt. Dadurch wird über den gesamten verformbaren Längenbereich eine Verbiegung des Verformungsstreifens und ein Herausrutschen aus dem Deformationsschlitten verhindert.

Eine zweite vorteilhafte Ausführungsform sieht vor, dass am Mantelrohr mehrere über den verformbaren Längenbereich des Verformungsstreifens verteilt angeordnete Abstandhalter vorgesehen sind. Auch mit mehreren Abstandhaltern kann eine Verbiegung des Verformungsstreifens und ein Herausrutschen aus dem Deformationsschlitten wirksam verhindert werden.

Bei einem weiteren vorteilhaften Ausführungsbeispiel der Erfindung sind zwei Verformungsstreifen vorgesehen, wobei ein unterer Verformungsstreifen direkt auf dem Mantelrohr und ein oberer Verformungsstreifen auf dem unteren Verformungsstreifen angeordnet ist. Um eine Verbiegung des oberen Verformungsstreifens und ein Herausrutschen aus dem zugehörigen Deformationsschlitten zu vermeiden, ist der untere Verformungsstreifen mit mindestens einem in Richtung des oberen Verformungsstreifen vorstehenden Vorsprung versehen. Dieser vorstehende Vorsprung des unteren Verformungsstreifens hält den oberen Verformungsstreifen auf Abstand, fixiert ihn in radialer Richtung und gewährleistet die einwandfreie Funktion der Energieabsorptionsvorrichtung. Dabei ist der untere Verformungsstreifen breiter als der obere Verformungsstreifen ausgebildet und ein auf dem oberen Verformungsstreifen angeordneter erster Deformationsschlitten ist schmäler als ein auf dem unteren Verformungsstreifen angeordneter zweiter Deformationsschlitten, wobei der zweite Deformationsschlitten beide Verformungsstreifen umgreifen, aber nur den unteren Verformungsstreifen einklemmt und der erste Deformationsschlitten nur den oberen Verformungsstreifen umgreift und einklemmt.

Mit Vorteil kann der mindestens eine Vorsprung in den unteren Verformungsstreifen eingeformt sein. Hierfür genügt ein einfacher Arbeitsschritt.

In einer ersten vorteilhaften Variante des Ausführungsbeispiels der Erfindung ist der Vorsprung stegartig ausgestaltet. Hierdurch wird eine Beabstandung der beiden Verformungsstreifen zueinander und deren Fixierung über einen weiten Längenbereich gewährleistet.

Besonders vorteilhaft ist es, wenn sich der stegartige Vorsprung über den verformbaren Längenbereich des unteren Verformungsstreifens erstreckt. Hierdurch wird die einwandfreie Funktion über den gesamten Verformungsbereich gewährleistet.

In einer zweiten Variante des Ausführungsbeispiels der Erfindung sind am unteren Verformungsstreifen mehrere über seinen verformbaren Längenbereich verteilt angeordnete Vorsprünge vorgesehen. Diese Variante wird empfohlen, wenn ein sich über den gesamten verformbaren Längenbereich erstreckender stegartiger Vorsprung aus konstruktionstechnischen Gründen nicht infrage kommt.

Eine vorteilhafte Ausgestaltungsform der Erfindung sieht weiter vor, dass der zumindest eine Deformationsschlitten über eine Zahnplatte mit der äußeren Manteleinheit verbunden ist, wobei ein mit Zähnen versehenes Arretierelement mit der äußeren Manteleinheit über eine Zuspannvorrichtung verbunden ist, die das Arretierelement gegen die Zahnplatte drückt, um diese im Fahrbetrieb an der Manteleinheit unverrückbar zu fixieren, so dass eine Verschiebung des Mantelrohrs gegenüber der Manteleinheit im Crashfall nur unter Betätigung der Energieabsorptionsvorrichtung möglich ist. Diese Anordnung benötigt besonders wenig Bauraum.

Unter dem, dass das Arretierelement gegen die Zahnplatte gedrückt ist, ist zu verstehen, dass das Arretierelement und die Zahnplatte sich in Eingriff miteinander befinden. Es ist dafür nicht notwendig, dass eine Kraft das Arretierelement in Richtung der Zahnplatte vorspannt.

Die Zuspannvorrichtung kann bevorzugt eine erste Hubscheibe und eine zweite Hubscheibe umfassen, wobei die erste Hubscheibe mit einem Betätigungshebel und einem Spannbolzen drehfest verbunden ist und mit der zweiten Hubscheibe zusammenwirkt, wobei bei einer Verdrehung der ersten Hubscheibe gegenüber der zweiten Hubscheibe mittels des Betätigungshebels ein Klemmhub in Richtung der Spannachse bereitgestellt wird. Die zweite Hubscheibe ist mit dem Arretierteil gekoppelt. Bevorzugt weist die erste Hubscheibe einen Nockenabschnitt auf. Die zweite Hubscheibe weist bevorzugt ein Kulissenkontur auf, die mit dem Nockenabschnitt zusammenwirken kann.

Die Zuspannvorrichtung ist mittels eines Betätigungshebels entweder zu gespannt oder gelöst, auch Fixierstellung und Freigabestellung genannt. Im gelösten Zustand (Freigabestellung) der Zuspannvorrichtung kann einerseits das Mantelrohr gegenüber der Manteleinheit teleskopiert werden. Im gespannten Zustand (Fixierstellung) ist das Mantelrohr gegenüber der Manteleinheit festgesetzt, so dass eine Verschiebung des Mantelrohrs gegenüber der Manteleinheit nur dann möglich ist, wenn eine Kraft in die Lenkwelle eingetragen wird, die eine vorbestimmte Losbrechkraft überschreitet. Mit anderen Worten kann das Mantelrohr in die Manteleinheit im Crashfall unter Energieaufnahme durch die Energieabsorptionsvorrichtung hinein teleskopieren. Im Normalbetrieb ist die Zuspannvorrichtung in der Fixierstellung, in der die Anpassung der Lenkwellenposition, d.h. die Verstellung des Mantelrohrs zur Manteleinheit verhindert ist.

In einer Ausführungsform ist es alternativ zu einer manuellen Verstellung möglich, dass das Mantelrohr und die Manteleinheit mittels eines motorischen Antriebs zueinander teleskopierbar ist. Die Fixierbarkeit des Mantelrohrs zu der Manteleinheit wird durch den Stillstand des motorischen Antriebs und in einer vorteilhaften Ausführungsform durch ein selbsthemmendes Getriebe realisiert.

Ausführungsbeispiele der Erfindung werden nachfolgend anhand der Zeichnungen näher erläutert. Die Figuren zeigen im Einzelnen
- Figur 1:: eine perspektivische Darstellung einer erfindungsgemäßen Lenksäule mit variabel schaltbarer Energieabsorptionsvorrichtung;
- Figur 2:: eine perspektivische Darstellung des inneren Mantelrohrs mit Energieabsorptionsvorrichtung;
- Figur 3:: eine Explosionsdarstellung der erfindungsgemäßen Energieabsorptionsvorrichtung am Mantelrohr;
- Figur 4:: eine geschnittene Darstellung eines Mantelrohrs mit Teilen der Energieabsorptionsvorrichtung;
- Figur 5:: eine perspektivische Darstellung eines Mantelrohrs mit Teilen der erfindungsgemäßen Energieabsorptionsvorrichtung in einer alternativen Ausführungsform.

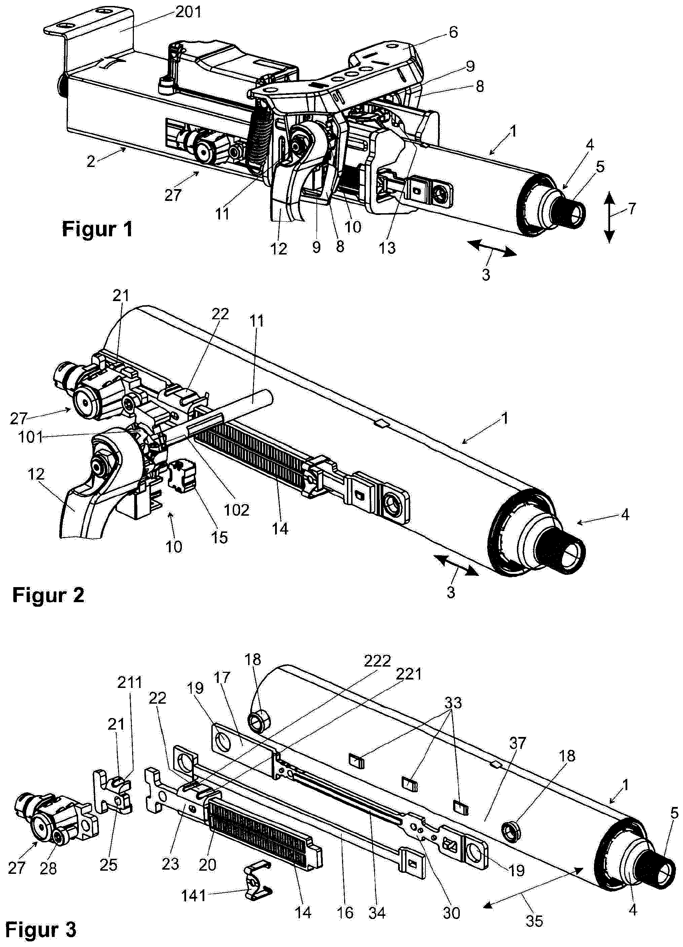

In Figur 1 zeigt eine erfindungsgemäße Lenksäule, bei der ein inneres Mantelrohr 1 in einer äußeren Manteleinheit 2 in Axialrichtung 3 längsverschiebbar gelagert ist. Im Mantelrohr 1 ist eine Lenkwelle 4 drehbar gelagert, an deren dem Fahrer des Kraftfahrzeugs zugewandten Ende 5 ein nicht gezeigtes Lenkrad montierbar ist. Die Manteleinheit 2 ist über einen Halter 6 mit dem nicht gezeigten Fahrzeugchassis verbindbar. Der Halter 6 ist am Fahrzeugchassis fest geschraubt, während die Manteleinheit 2 gegenüber dem Halter 6 in Vertikalrichtung 7 schwenkbar gelagert ist. Die Manteleinheit 2 umfasst einen Befestigungsabschnitt 201, der mit dem Fahrzeugchassis verbindbar ist und sich durch eine Verstellung in Vertikalrichtung 7 elastisch verformt.

Für die schwenkbare Lagerung ist der Halter 6 mit zwei die Manteleinheit 2 umgreifenden Klemmbacken 8 versehen, die Vertikalschlitze 9 aufweisen. Eine Zuspannvorrichtung 10 ist mit einem Spannbolzen 11 versehen, der durch die Vertikalschlitze 9 der Klemmbacken 8 und durch zwei Bohrungen 13 der Manteleinheit 2 hindurch geht. Die Zuspannvorrichtung 10 umfasst einen als Nockenscheibe ausgebildete erste Hubscheibe 101 und einer als Kulissenscheibe ausgebildeten zweiten Hubscheibe 102, wobei die zweite Hubscheibe eine Kurvenbahn 103 aufweist. Die ersten Hubscheibe 101 ist mit einem Betätigungshebel 12 und dem Spannbolzen 11 drehfest verbunden. Die Zuspannvorrichtung 10 wird mittels des Betätigungshebels 12 entweder zugespannt oder gelöst, in dem die erste Hubscheibe 101 gegenüber der zweiten Hubscheibe 102 um die Achse des Spannbolzens 11 verdreht wird. Im gelösten Zustand (Freigabestellung) der Zuspannvorrichtung 10 kann einerseits das Mantelrohr 1 gegenüber der Manteleinheit 2 in Axialrichtung 3 verschoben werden und andererseits die Manteleinheit 2 gegenüber dem Halter 6 in Vertikalrichtung 7 verschwenkt werden. Hierdurch wird eine Längsverstellung des Lenkrads in Axialrichtung 3 und eine Höhenverstellung des Lenkrads in Vertikalrichtung 7 ermöglicht. Im zugespannten Zustand (Fixierstellung) der Zuspannvorrichtung 10 wird sowohl das Mantelrohr 1 in der Manteleinheit 2 als auch die Manteleinheit 2 im Halter 6 festgeklemmt, so dass die Lenksäule fixiert ist und keine Höhenverstellung oder Längsverstellung des Lenkrads mehr möglich ist.

Wie man am besten in Figur 2 erkennt, ist das Mantelrohr 1 mit einer in Axialrichtung 3 ausgerichteten Zahnplatte 14 versehen. Ein durch die Zuspannvorrichtung 10 an die Zahnplatte 14 andrückbares Arretierelement 15 ist ebenfalls mit Zähnen versehen. Wenn im zugespannten Zustand der Zuspannvorrichtung 10 das Arretierelement 15 an die Zahnplatte 14 angepresst wird, greifen die Zähne des Arretierelements 15, welches mit der zweiten Hubscheibe 102 wirkverbunden ist, und die Zähne der Zahnplatte 14 ineinander, sodass die Zahnplatte 14 gegenüber dem Halter 6 unverrückbar fixiert ist. Eine Verschiebung der Zahnplatte 14 gegenüber dem Halter 6 in Axialrichtung 3 ist dann nicht mehr möglich.

Um das Mantelrohr 1 gegenüber der Manteleinheit 2 im Normalbetrieb des Fahrzeugs in Axialrichtung 3 zu verschieben, muss über den Betätigungshebel 12 die Zuspannvorrichtung 10 gelöst werden,d.h. von der Fixierstellung in die Freigabestellung überführt werden, wobei das Arretierelement 15 von der Zahnplatte 14 abhebt und eine Verschiebung der Zahnplatte 14 in Axialrichtung 3 gegenüber dem Arretierelement 15 möglich ist. Das Arretierelement 15 selbst kann gegenüber dem Halter 6 und der Manteleinheit 2 in Axialrichtung 3 nicht verschoben werden, da der Spannbolzen 11 durch die Vertikalschlitzen 9 an einer solchen Verschiebung gehindert wird. Der Spannbolzen 11 kann allerdings in den Vertikalschlitzen 9 in Vertikalrichtung 7 verschoben werden. Hierdurch wird die Manteleinheit 2 mit dem darin angeordneten Mantelrohr 1 in Vertikalrichtung 7 verschwenkt. Zusammen mit dem Mantelrohr 1 und der Manteleinheit 2 wird auch die Zuspannvorrichtung 10 mit dem Spannbolzen 11, dem Betätigungshebel 12 und dem Arretierelement 15 in Vertikalrichtung 7 verschwenkt, so dass das Arretierelement 15 stets im Bereich der Zahnplatte 14 verbleibt.

Wie man am besten in Figur 3 erkennt, sind auf dem Mantelrohr 1 zwei in Axialrichtung 3 ausgerichtete Verformungsstreifen 16, 17 angeordnet, wobei ein oberer Verformungsstreifen 16 über einem unteren Verformungsstreifen 17 angeordnet ist. Der untere Verformungsstreifen 17 ist direkt am Mantelrohr 1 angeordnet. Zur Befestigung am Mantelrohr 1 ist dieses mit Befestigungselementen 18 versehen, die über die Oberfläche des Mantelrohrs 1 hinaus und durch korrespondierende Öffnungen 19 an den Enden der Verformungsstreifen 16, 17 ragen.

Die Zahnplatte 14 ist an ihrem in Fahrtrichtung des Fahrzeugs liegenden Ende 20 mit zwei Deformationsschlitten 21, 22 verbunden, wobei ein erster Deformationsschlitten 21 auskoppelbar ist. Eine Koppelschiene 23 verbindet das Ende 20 der Zahnplatte 14 mit den beiden Deformationsschlitten 21, 22, wobei die Verbindung zum zweiten Deformationsschlitten 22 fest und die Verbindung zum ersten Deformationsschlitten 21 auskoppelbar ausgestaltet ist. Die Zahnplatte 14 und der zweite Deformationsschlitten 22 sind als einstückiges integrales Bauteil ausgebildet. Die Zahnplatte 14 und der zweite Deformationsschlitten 22 kann sowohl als Umformbauteil oder als Sinterbauteil ausgebildet sein. Eine Klammerfeder 141 dient als Niederhalter und befestigt die Zahnplatte 14 auf der dem ersten Deformationsschlitten 22 abgewandten Seite an dem zweiten Verformungsstreifen 17, so dass ein radiales Abheben der Zahnplatte 14 im Crashfall verhindert wird. Die Kopplung des ersten Deformationsschlittens 21 an die Koppelschiene 23 erfolgt mittels eines nicht gezeigten Koppelbolzens, der in eine Bohrung 25 des ersten Deformationsschlittens 21 einführbar ist. In einer Bohrung 26 der Koppelschiene 23 ist ein pyrotechnischer Schalter 27 mittels eines Befestigungsbolzens 28 befestigt. Der Koppelbolzen ragt im Normalfall durch die Bohrung 25 des ersten Deformationsschlittens 21. Durch Betätigung des pyrotechnischen Schalters 27 kann der Koppelbolzen aus der Bohrung 25 des ersten Deformationsschlittens 21 herausgezogen werden, so dass der erste Deformationsschlitten 21 von der Koppelschiene 23 entkoppelt ist.

Wenn beispielsweise im Crashfall der Fahrer auf das Lenkrad aufprallt, wirken auf das Lenkrad und damit auf die Lenkwelle 4 und das Mantelrohr 1 in Fahrtrichtung sehr hohe Kräfte, die eine Verschiebung des Mantelrohrs 1 gegenüber der Manteleinheit 2 in Axialrichtung 3 verursachen können. Da die Zahnplatte 14 über das Arretierelement 15 mittels der Zuspannvorrichtung 10 unverrückbar mit der Manteleinheit 2 verbunden ist, kann sie sich nicht in Axialrichtung 3 bewegen. Dasselbe gilt für den mit der Zahnplatte 14 unlösbar verbundenen zweiten Deformationsschlitten 22 und auch für den ersten Deformationsschlitten 21, wenn er über den pyrotechnischen Schalter 27 und den Koppelbolzen mit der Koppelschiene 23 verbunden ist. Wenn im Crashfall das Mantelrohr 1 mit hoher Kraft zwangsweise gegenüber der Manteleinheit 2 in Axialrichtung 3 verschoben wird, nimmt es die beiden fest mit dem Mantelrohr 1 verbundenen Verformungsstreifen 16, 17 mit. Da andererseits die beiden Deformationsschlitten 21, 22 gegenüber der Manteleinheit 2 nicht verschoben werden können, werden sie über die zugehörigen Verformungsstreifen 16, 17 gezogen und verformen diese dabei. Die für die Verformung der Verformungsstreifen 16, 17 aufzuwendende Verformungsenergie wird somit aus der Bewegungsenergie absorbiert. Dabei wird das Mantelrohr 1 und über die Lenkwelle 4 und das Lenkrad der aufprallende Fahrer in dem Maße abgebremst als die Bewegungsenergie in beiden Verformungsstreifen 16, 17 absorbiert wird.

Wenn im Crashfall andere Umstände auftreten, beispielsweise weil der Fahrer mit dem Sicherheitsgurt gesichert ist, so wird der Aufprall auf das Lenkrad weniger hart ausfallen und in der Energieabsorptionsvorrichtung muss weniger Energie absorbiert werden. In diesem Fall wird der pyrotechnische Schalter 27 betätigt, der den Koppelbolzen aus der Bohrung 25 des ersten Deformationsschlittens 21 heraus zieht. Wenn in diesem Fall das Mantelrohr 1 wiederum unter den im Crashfall auftretenden Kräften gegenüber der Manteleinheit 2 in Axialrichtung 3 verschoben wird, wird der abgekoppelte erste Deformationsschlitten 21 nicht bewegt, sondern bleibt an seinem Platz, den er vor dem Crash einnahm. Lediglich der zweite Deformationsschlitten 22, der unlösbar mit der Koppelschiene 23 verbunden ist, wird über den zweiten Verformungsstreifen 17 gezogen.

In diesem Fall wird also lediglich der untere Verformungsstreifen 17 verformt, der obere Verformungsstreifen 16 bleibt unverformt. Zur Verformung eines einzigen Verformungsstreifens 17 wird weniger Verformungsenergie benötigt als im anderen Fall, in dem zwei Verformungsstreifen 16, 17 verformt werden müssen. Daher absorbiert auch die Verformung eines einzigen Verformungsstreifens 17 weniger Bewegungsenergie als die Verformung von zwei Verformungsstreifen 16, 17. Folglich führt die Betätigung des pyrotechnischen Schalters 27 vor dem Verschieben des Mantelrohrs 1 gegenüber der Manteleinheit 2 dazu, dass bei der Verschiebung in Axialrichtung 3 durch die erfindungsgemäße Energieabsorptionsvorrichtung weniger Bewegungsenergie absorbiert wird als im Falle ohne Betätigung des pyrotechnischen Schalters 27. Die im Crashfall absorbierte Bewegungsenergie kann daher an die jeweils vorgefundenen Umstände des Crashfalls angepasst werden.

Die erfindungsgemäße adaptive Energieabsorptionsvorrichtung benötigt nur sehr wenig Bauraum, weil die Verformungsstreifen 16, 17 und die Zahnplatte 14 direkt übereinanderliegend auf derselben Seite der Oberfläche des Mantelrohrs 1 angeordnet sind. Damit der erste Deformationsschlitten 21 nur den oberen Verformungsstreifen 16 und der zweite Deformationsschlitten 22 nur den unteren Verformungsstreifen 17 verformt, ist der näher am Mantelrohr 1 liegende untere Verformungstreifen quer zur Axialrichtung 3 etwas breiter ausgestaltet als der obere Verformungsstreifen 16. Der erste Deformationsschlitten 21 umfasst mit seinen kurzen Flanken lediglich den oberen Verformungsstreifen 16. Dabei klemmen die kurzen Flanken des ersten Deformationsschlittens 21 die Schmalseiten des oberen Verformungsstreifens 16 so fest ein, dass sie den oberen Verformungsstreifen 16 verformen, sobald der erste Deformationsschlitten 21 in Axialrichtung 3 über den oberen Verformungsstreifen 16 gezogen wird.

Der zweite Deformationsschlitten 22 ist quer zur Axialrichtung 3 breiter ausgestaltet und seine längeren Flanken erreichen den unter dem oberen Verformungsstreifen 16 liegenden breiteren unteren Verformungsstreifen 17, so dass der zweite Deformationsschlitten 22 mit seinen längeren Flanken die Schmalseiten des unteren Verformungsstreifens 17 so fest einklemmt, dass er den unteren Verformungsstreifen 17 verformt, sobald der zweite Deformationsschlitten 22 über den unteren Verformungsstreifen 17 gezogen wird.

Dabei umfasst der zweite Deformationsschlitten 22 auch den oberen Verformungsstreifen 16. Da der zweite Deformationsschlitten 22 aber breiter ist als der erste Deformationsschlitten 21 umklammern die Flanken des zweiten Deformationsschlittens 22 nicht die Schmalseiten des oberen Verformungsstreifens 16. Deshalb wird der obere Verformungsstreifen 16 nicht verformt wenn der zweite Deformationsschlitten 22 in Axialrichtung 3 darüber gezogen wird.

Der erste Deformationsschlitten 21 umfasst bolzenartige Vorsprünge 211, die mit den Schmalseiten des Verformungsstreifen 16 zusammenwirken und diesen im Fall einer Relativbewegung deformieren. Die Vorsprünge sind zueinander beabstandet, wobei der Abstand zwischen den Vorsprüngen geringer ist als die Breite des Verformungsstreifens 16, d.h. die Breite der Schmalseiten des Verformungsstreifens 17. Die bolzenartigen Vorsprünge können eine abgerundete Oberfläche auf.

Der zweite Deformationsschlitten 22 umfasst ein erstes Paar bolzenartige Vorsprünge 221 und ein zweites Paar bolzenartige Vorsprünge 222, die mit den Schmalseiten des Verformungsstreifen 17 zusammenwirken und diesen deformieren. Die Vorsprünge 221 bzw. die Vorsprünge 222 sind zueinander beabstandet, wobei der Abstand zwischen den Vorsprüngen 221 bzw. den Vorsprüngen 222 geringer ist als die Breite des Verformungsstreifens 17, d.h. die Breite der Schmalseiten des Verformungsstreifens 17. Die bolzenartigen Vorsprünge 221 und die bolzenartigen Vorsprünge 222 weisen eine abgerundete Oberfläche auf. Es kann vorgesehen sein, dass der Abstand der zweiten Vorsprünge 222 zueinander geringer, gleich oder größer ist als der Abstand des ersten Vorsprünge 221 zueinander. Dadurch lassen sich die Crasheigenschaften konstruktiv einstellen.

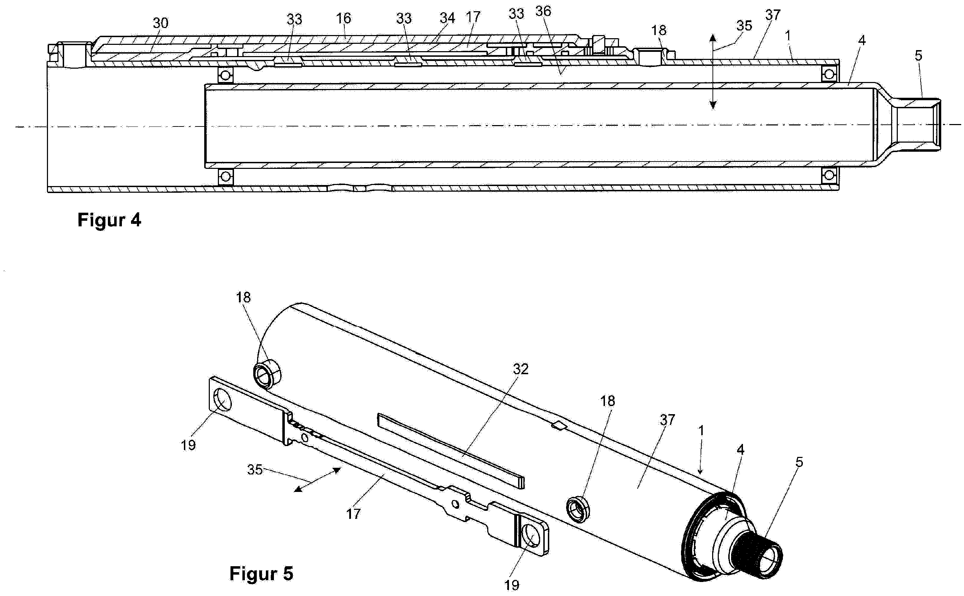

Wie man am besten in den Figuren 3 bis 5 erkennt, sind am Mantelrohr 1 ein oder mehrere Abstandhalter 32, 33 angeordnet. Bei der in Figur 5 gezeigten Ausführungsform erstreckt sich ein stegförmiger Abstandhalter 32 über den verformbaren Längenbereich des Verformungsstreifens 17, der im montierten Zustand direkt auf dem Abstandhalter 32 aufliegt und durch diesen in radialer Richtung 35 fixiert wird. Dadurch kann sich der Verformungsstreifen 17 nicht derart verbiegen. Das in der Figur 5 dargestellte Mantelrohr 1 ist lediglich mit einem einzigen Verformungsstreifen 17 ausgestattet. Der stegförmige Abstandshalter 32 ist einstückig mit dem Mantelrohr 1 ausgebildet. Alternativ ist es ebenfalls denkbar und möglich, dass dieser als separates Bauteil, beispielsweise aus Kunststoff ausgebildet ist und mittels Fixierelemente wie Clipse an dem Mantelrohr 1 befestigt wird.

Die in den Figuren 3 und 4 dargestellte Ausführungsform hat die gleiche Wirkung wie die in der Figur 5 dargesllte Ausführungsform, wobei in den Figuren 3 und 4 am Mantelrohr 1 mehrere Abstandhalter 33 vorgesehen sind, die über den verformbaren Längenbereich des unteren Verformungsstreifens 17 im Abstand zueinander verteilt angeordnet sind.

In beiden genannten Ausführungsformen sind die Abstandhalter 32, 33 durch Rollieren von der Innenseite 36 her in das Mantelrohr 1 eingeformt worden, so dass sie als Ausbuchtungen 32, 33 der Außenseite 37 des Mantelrohrs 1 erscheinen.

Wie man in den Figuren 3 und 4 erkennt, ist der untere Verformungsstreifen 17 auf seiner dem oberen Verformungsstreifen 16 zugewandten Oberseite 30 mit einem stegartigen Vorsprung 34 versehen, der als Abstandhalter zwischen den Verformungsstreifen 16, 17 dient. Durch diese Maßnahme ist es möglich, die beiden Verformungsstreifen 16, 17 direkt übereinanderliegend anzuordnen. Dies ermöglicht eine besonders kompakte Bauform. Durch den Vorsprung 34 wird sichergestellt, dass sich die Verformungstreifen 16, 17 nicht derart verbiegen können, dass sie aus den jeweiligen Deformationsschlitten 21, 22 herausrutschen. Außerdem wird so ein Raum für die Verformungen der Schmalseiten der Verformungsstreifen 16, 17 zur Verfügung gestellt, so dass gegenseitige Beeinträchtigungen ihrer Funktionen vermieden werden. In einer nicht gezeigten Ausführungsform kann der Vorsprung 34 des Verformungsstreifens 17 auch als mehrere Abstandshalter ausgebildet sein, beispielsweise als einzelne Noppen, die in den Verformungsstreifen eingeformt sind.

Die Erfindung erlaubt eine besonders kompakte Bauform, die mit geringen Fertigungskosten verbunden ist und dennoch eine zuverlässige Funktion der Energieabsorptionsvorrichtung gewährleistet.

### BEZUGSZEICHEN

- 1: Mantelrohr
- 2: Manteleinheit
- 3: Axialrichtung
- 4: Lenksäule
- 5: Ende
- 6: Halter
- 7: Vertikalrichtung
- 8: Klemmbacken
- 9: Vertikalschlitze
- 10: Zuspannvorrichtung
- 11: Spannbolzen
- 12: Betätigungshebel
- 13: Bohrung
- 14: Zahnplatte
- 15: Arretierelement
- 16: oberer Verformungsstreifen
- 17: unterer Verformungsstreifen
- 18: Befestigungselement
- 19: Öffnung
- 20: Ende
- 21: erster Deformationsschlitten
- 22: zweiter Deformationsschlitten
- 23: Koppelschiene
- 24:
- 25: Bohrung
- 26: Bohrung
- 27: Schalter
- 28: Befestigungsbolzen
- 29: Unterseite
- 30: Oberseite
- 31:
- 32: Abstandhalter / Ausbuchtung
- 33: Abstandhalter / Ausbuchtung
- 34: Vorsprung
- 35: radiale Richtung
- 36: Innenseite
- 38: Außenseite

## Patentansprüche

1. Lenksäule für ein Kraftfahrzeug, mit einem inneren Mantelrohr (1), das eine Lenkwelle (4) drehbar lagert, und einer äußeren Manteleinheit (2), die mit dem Fahrzeugchassis verbindbar ist und in der das innere Mantelrohr (1) in Axialrichtung (3) verschiebbar aufgenommen und fixierbar ist; mit einer wirkungsmäßig zwischen dem Mantelrohr (1) und der Manteleinheit (2) angeordneten Energieabsorptionsvorrichtung (17, 22), in der ein Teil der im Crashfall auftretenden Energie absorbierbar ist, wenn das Mantelrohr (1) gegenüber der Manteleinheit (2) teleskopisch verschoben wird, wobei die Energieabsorptionsvorrichtung (17, 22) mindestens einen auf dem Mantelrohr (1) befestigten Verformungsstreifen (17) aufweist, auf dem mindestens ein mit der Manteleinheit (2) verbundener Deformationsschlitten (22) angeordnet ist, der die äußeren Schmalseiten des mindestens einen Verformungsstreifens (17) umgreift und einklemmt, dass dieser den Verformungsstreifen (17) verformt, wenn im Crashfall der Verformungsstreifen (17) in Axialrichtung (3) gegenüber dem Deformationsschlitten (22) verschoben wird, wobei der Verformungsstreifen (17) durch mindestens einen am Mantelrohr (1) angeordneten Abstandhalter (32, 33) im Abstand zum Mantelrohr (1) gehalten und in radialer Richtung (35) fixiert ist, **dadurch gekennzeichnet, dass** der oder jeder Abstandhalter (32, 33) als eine vom Mantelrohr (1) in Richtung des mindestens einen Verformungsstreifens (17) ragende radiale Ausbuchtung des Mantelrohrs (1) ausgestaltet ist.

2. Lenksäule nach Anspruch 1, **dadurch gekennzeichnet, dass** die oder jede Ausbuchtung (32, 33) als eine von der Innenseite (36) des Mantelrohrs (1) eingebrachte Rollierung ausgestaltet ist.

3. Lenksäule nach einem der vorhergehenden Ansprüche, **dadurch gekennzeichnet, dass** der Abstandhalter (32) als ein in Axialrichtung (3) ausgerichteter Vorsprung ausgestaltet ist.

4. Lenksäule nach Anspruch 3, **dadurch gekennzeichnet, dass** sich der Abstandhalter (32) in Axialrichtung (3) über den verformbaren Längenbereich des Verformungsstreifens (17) erstreckt.

5. Lenksäule nach einem der Ansprüche 1 bis 2, **dadurch gekennzeichnet, dass** am Mantelrohr (1) mehrere über den verformbaren Längenbereich des Verformungsstreifens (17) verteilt angeordnete Abstandhalter (33) vorgesehen sind.

6. Lenksäule nach einem der vorhergehenden Ansprüche, **dadurch gekennzeichnet, dass** auf einem auf dem Mantelrohr (1) angeordneten unteren Verformungsstreifen (17) ein weiterer oberer Verformungsstreifen (16) angeordnet ist und dass der untere Verformungsstreifen (17) mit mindestens einem in Richtung des oberen Verformungsstreifens (16) vorstehenden Vorsprung (34) versehen ist, dass der untere Verformungsstreifen (17) breiter als der obere Verformungsstreifen (16) ausgebildet ist, dass ein auf dem oberen Verformungsstreifen (16) angeordneter erster Deformationsschlitten (21) schmäler als ein auf dem unteren Verformungsstreifen (17) angeordneter zweiter Deformationsschlitten (22) ist, wobei der zweite Deformationsschlitten (22) beide Verformungsstreifen (16, 17) umgreift, aber nur den unteren Verformungsstreifen (17) einklemmt; und dass der erste Deformationsschlitten (21) nur den oberen Verformungsstreifen (16) umgreift und einklemmt.

7. Lenksäule nach Anspruch 6, **dadurch gekennzeichnet, dass** der mindestens eine Vorsprung (34) in den unteren Verformungsstreifen (17) eingeformt ist.

8. Lenksäule nach Anspruch 6 oder 7, **dadurch gekennzeichnet, dass** der Vorsprung (34) stegartig ausgestaltet ist.

9. Lenksäule nach Anspruch 8, **dadurch gekennzeichnet, dass** sich der stegartige Vorsprung (34) über den verformbaren Längenbereich des unteren Verformungsstreifens (17) erstreckt.

10. Lenksäule nach Anspruch 6 oder 7, **dadurch gekennzeichnet, dass** am unteren Verformungsstreifen (17) mehrere über seinen verformbaren Längenbereich verteilt angeordnete Vorsprünge vorgesehen sind.

## Claims

1. A steering column for a motor vehicle, having an inner casing tube (1) which rotatably mounts a steering shaft (4), and an outer casing unit (2) which is capable of being connected to the vehicle chassis and in which the inner casing tube (1) is received so as to be displaceable and fixable in the axial direction (3); having an energy absorption device (17, 22) which is operatively disposed between the casing tube (1) and the casing unit (2) and in which part of the energy arising in the event of a crash is capable of being absorbed when the casing tube (1) is telescopically displaced in relation to the casing unit (2), wherein the energy absorption device (17, 22) comprises at least one deformation strip (17) which is fastened to the casing tube (1) and on which at least one deformation slide (22) that is connected to the casing unit (2) is disposed, said at least one deformation slide (22) encompassing and jamming the outer narrow sides of the at least one deformation strip (17) such that said deformation slide (22) deforms the deformation strip (17) when the deformation strip (17) in the crash event is displaced in the axial direction (3) in relation to the deformation slide (22), wherein the deformation strip (17) is held so as to be spaced apart from the casing tube (1) and fixed in the radial direction (35) by at least one spacer (32, 33) that is disposed on the casing tube (1), **characterized in that** the or each spacer (32, 33) is designed as a radial convexity of the casing tube (1) that from the casing tube (1) protrudes in the direction of the at least one deformation strip (17).

2. The steering column as claimed in claim 1, **characterized in that** the or each convexity (32, 33) is designed as a roller-burnished feature that is incorporated from the internal side (36) of the casing tube (1).

3. The steering column as claimed in one of the preceding claims, **characterized in that** the spacer (32) is designed as a protrusion that is aligned in the axial direction (3).

4. The steering column as claimed in claim 3, **characterized in that** the spacer (32) extends in the axial direction (3) across the deformable longitudinal region of the deformation strip (17).

5. The steering column as claimed in one of claims 1 to 2, **characterized in that** a plurality of spacers (33) that are disposed so as to be distributed across the deformable longitudinal region of the deformation strip (17) are provided on the casing tube (1).

6. The steering column as claimed in one of the preceding claims, **characterized in that** a further upper deformation strip (16) is disposed on a lower deformation strip (17) that is disposed on the casing tube (1), and **in that** the lower deformation strip (17) is provided with at least one protrusion (34) that projects in the direction of the upper deformation strip (16), **in that** the lower deformation strip (17) is configured so as to be wider than the upper deformation strip (16), **in that** a first deformation slide (21) that is disposed on the upper deformation strip (16) is narrower than a second deformation slide (22) that is disposed on the lower deformation strip (17), wherein the second deformation slide (22) encompasses both deformation strips (16, 17) but jams only the lower deformation strip (17), and **in that** the first deformation slide (21) encompasses and jams only the upper deformation strip (16).

7. The steering column as claimed in claim 6, **characterized in that** the at least one protrusion (34) is molded in the lower deformation strip (17) .

8. The steering column as claimed in claim 6 or 7, **characterized in that** the protrusion (34) is designed in the manner of a web.

9. The steering column as claimed in claim 8, **characterized in that** the web-type protrusion (34) extends across the deformable longitudinal region of the lower deformation strip (17).

10. The steering column as claimed in claim 6 or 7, **characterized in that** a plurality of protrusions that are disposed so as to be distributed across the deformable longitudinal region of the lower deformation strip (17) are provided on the latter.

## Revendications

1. Colonne de direction pour un véhicule automobile, comprenant un tube d'enveloppe intérieur (1) qui supporte de manière rotative un arbre de direction (4) et une unité d'enveloppe extérieure (2) qui peut être connectée au châssis du véhicule et dans laquelle le tube d'enveloppe intérieur (1) est reçu de manière à pouvoir coulisser dans la direction axiale (3) et peut être fixé ; un dispositif d'absorption d'énergie (17, 22) disposé fonctionnellement entre le tube d'enveloppe (1) et l'unité d'enveloppe (2), dans lequel une partie de l'énergie produite en cas de collision peut être absorbée lorsque le tube d'enveloppe (1) est coulissé de manière télescopique par rapport à l'unité d'enveloppe (2), le dispositif d'absorption d'énergie (17, 22) présentant au moins une bande de déformation (17) fixée au tube d'enveloppe (1) sur laquelle est disposé au moins un coulisseau de déformation (22) connecté à l'unité d'enveloppe (2), lequel vient en prise autour des côtés étroits extérieurs de l'au moins une bande de déformation (17) et les enserre, celui-ci déformant la bande de déformation (17), lorsque, dans le cas d'une collision, la bande de déformation (17) est coulissée dans la direction axiale (3) par rapport au coulisseau de déformation (22), la bande de déformation (17) étant retenue à distance du tube d'enveloppe (1) par au moins un élément d'espacement (32, 33) disposé sur le tube d'enveloppe (1) et étant fixée dans la direction radiale (35), **caractérisée en ce que** le ou chaque élément d'espacement (32, 33) est configuré sous forme de renflement radial du tube d'enveloppe (1) saillant depuis le tube d'enveloppe (1) dans la direction de l'au moins une bande de déformation (17).

2. Colonne de direction selon la revendication 1, **caractérisée en ce que** le ou chaque renflement (32, 33) est configuré sous forme de pièce roulée réalisée depuis le côté intérieur (36) du tube d'enveloppe (1).

3. Colonne de direction selon l'une quelconque des revendications précédentes, **caractérisée en ce que** l'élément d'espacement (32) est configuré sous forme de saillie orientée dans la direction axiale (3).

4. Colonne de direction selon la revendication 3, **caractérisée en ce que** l'élément d'espacement (32) s'étend dans la direction axiale (3) sur la région déformable de la longueur de la bande de déformation (17) .

5. Colonne de direction selon l'une quelconque des revendications 1 et 2, **caractérisée en ce que** plusieurs éléments d'espacement (33) répartis sur la région déformable de la longueur de la bande de déformation (17) sont prévus sur le tube d'enveloppe (1).

6. Colonne de direction selon l'une quelconque des revendications précédentes, **caractérisée en ce que** sur une bande de déformation inférieure (17) disposée sur le tube d'enveloppe (1) est disposée une bande de déformation supérieure supplémentaire (16) et **en ce que** la bande de déformation inférieure (17) est pourvue d'au moins une saillie (34) faisant saillie dans la direction de la bande de déformation supérieure (16), **en ce que** la bande de déformation inférieure (17) est plus large que la bande de déformation supérieure (16), **en ce qu'**un premier coulisseau de déformation (21) disposé sur la bande de déformation supérieure (16) est plus étroit qu'un deuxième coulisseau de déformation (22) disposé sur la bande de déformation inférieure (17), le deuxième coulisseau de déformation (22) venant en prise autour des deux bandes de déformation (16, 17) mais enserrant seulement la bande de déformation inférieure (17) ; et **en ce que** le premier coulisseau de déformation (21) enserre et vient en prise autour de seulement la bande de déformation supérieure (16).

7. Colonne de direction selon la revendication 6, **caractérisée en ce que** l'au moins une saillie (34) est formée dans la bande de déformation inférieure (17).

8. Colonne de direction selon la revendication 6 ou 7, **caractérisée en ce que** la saillie (34) est configurée en forme de nervure.

9. Colonne de direction selon la revendication 8, **caractérisée en ce que** la saillie en forme de nervure (34) s'étend sur la région déformable de la longueur de la bande de déformation inférieure (17).

10. Colonne de direction selon la revendication 6 ou 7, **caractérisée en ce que** plusieurs saillies réparties sur sa région de longueur déformable sont prévues au niveau de la bande de déformation inférieure (17).
